# EUROPEAN PATENT APPLICATION

(11) **EP 3 330 558 A1**
(43) Date of publication of application: **06.06.2018**
(21) Application number: 17199013.8
(22) Date of filing: 27.10.2017
(51) Int. Cl.: F16D 3/10, F16D 3/64, H02K 49/10

(54) **ROTATIONAL POWER TRANSMISSION MECHANISM AND HEAT TREATMENT FURNACE**

(30) Priority: 14.11.2016 JP 2016221895
(71) Applicant: TOYOTA JIDOSHA KABUSHIKI KAISHA, Toyota-shi, Aichi-ken, 471-8571 (JP)
(72) Inventor: YAMASHITA, Osamu, Aichi-ken, 471-8571 (JP)
(74) Representative: J A Kemp

(57) **Abstract**

A rotational power transmission mechanism (1) includes: an input shaft (11) and an output shaft (21) that are apart from each other; a first rotary member (12) fixed to a tip end of the input shaft (11) on an output shaft (21) side of the input shaft (11); and a second rotary member (22) fixed to a tip end of the output shaft (21) on an input shaft (11) side of the output shaft (21) so as to face the first rotary member. Into recessed portions (14), projected portions (24) are inserted, permanent magnets (13, 23) are respectively provided on a pair of contact surfaces of each recessed portion (14) and on a pair of contact surfaces of each projected portion (24) in such a manner that the recessed portion (14) and the projected portion (24) repel each other at the respective pairs of contact surfaces where the recessed portion (14) and the projected portion (24) come into contact with each other.

## Description

### BACKGROUND OF THE INVENTION

### 1. Field of the Invention

The present invention relates to a rotational power transmission mechanism and a heat treatment furnace, in particular to a rotational power transmission mechanism and a heat treatment furnace capable of transmitting rotational power from an input shaft to an output shaft apart from the input shaft in a non-contact state.

### 2. Description of Related Art

Japanese Patent Application publication No. 57-134066 discloses a rotational power transmission mechanism capable of transmitting rotational power from an input shaft to an output shaft apart from the input shaft in a non-contact state by using attraction force of permanent magnets.

### SUMMARY OF THE INVENTION

In the rotational power transmission mechanism disclosed in JP 57-134066 A, only magnetic force of permanent magnets is used. Hence, when rotational torque is large at the start-up time of rotation or the like, slippage might occur between the input shaft and the output shaft, so that rotational power cannot be transmitted. Once slippage occurs, it is impossible to transmit the rotational power again in a rotating state, and thus it is required to stop the rotation and then restart the rotation.

The present invention provides a rotational power transmission mechanism and a heat treatment furnace capable of transmitting rotational power in a non-contact state as well as suppressing slippage.

A rotational power transmission mechanism according to one first aspect of the present invention includes: an input shaft and an output shaft that are apart from each other; a first rotary member fixed to a tip end of the input shaft on an output shaft side of the input shaft; and a second rotary member fixed to a tip end of the output shaft on an input shaft side of the output shaft so as to face the first rotary member, wherein into a recessed portion formed around a rotational axis of one of the first rotary member and the second rotary member, a projected portion formed around a rotational axis of the other of the first rotary member and the second rotary member is inserted such that the first rotary member and the second rotary member are coupled to each other in a relatively rotatable manner, and permanent magnets are respectively provided on a pair of contact surfaces of the recessed portion and on a pair of contact surfaces of the projected portion in such a manner that the recessed portion and the projected portion repel each other at the respective pairs of contact surfaces where the recessed portion and the projected portion come into contact with each other through relative rotation between the first rotary member and the second rotary member.

In the rotational power transmission mechanism according to one aspect of the present invention, into the recessed portion formed around the rotational axis of one of the first rotary member and the second rotary member, the projected portion formed around the rotational axis of the other of the first rotary member and the second rotary member is inserted such that the first rotary member and the second rotary member are coupled to each other in a relatively rotatable manner, the permanent magnets are provided on the pair of contact surfaces of the recessed portion and on the pair of contact surfaces of the projected portion in such a manner that the recessed portion and the projected portion repel each other at the respective pairs of contact surfaces where the recessed portion and the projected portion come into contact with each other through relative rotation between the first rotary member and the second rotary member. With such a configuration, when rotational torque is relatively small, the rotational power can be transmitted from the first rotary member to the second rotary member in a non-contact state by repellent force of the permanent magnets. On the other hand, when the rotational power is relatively large, since the rotational torque overcomes the repellent force of the permanent magnets to come into contact with each other, the slippage is suppressed, and the rotational power can be transmitted directly from the first rotary member to the second rotary member. That is, the rotational power can be transmitted in a non-contact state, while the slippage can be suppressed.

In the projected portion, the permanent magnets in the pair of contact surfaces have different polarities from each other. With such a configuration, it is possible to align magnetic flux lines of the pair of permanent magnets provided on the projected portion so as to boost repellent force against the permanent magnets provided on the recessed portion, to thereby easily maintain the non-contact state between the first rotary member and the second rotary member.

A plurality of recessed portions may be formed with intervals along a circumferential direction of the first rotary member, and a plurality of projected portions may be formed with intervals along a circumferential direction of the second rotary member. With such a configuration, it is possible to boost the repellent force of the permanent magnets, to thereby easily maintain the non-contact state between the first rotary member and the second rotary member.

A heat treatment furnace according to one aspect of the present invention includes: the above rotational power transmission mechanism; a motor coupled to the input shaft of the rotational power transmission mechanism; a fan fixed to a tip end of the output shaft of the rotational power transmission mechanism; and a furnace body, wherein the fan is disposed inside the furnace body.

According to the present invention, it is possible to provide a rotational power transmission mechanism and a heat treatment furnace capable of transmitting the rotational power in a non-contact state, and suppressing the slippage.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view of a rotational power transmission mechanism according to a first embodiment;
FIG. 2 is a cross-sectional view showing a positional relation between an input-side rotary member 12 and an output-side rotary member 22;
FIG. 3 is a cross-sectional view showing the positional relation between the input-side rotary member 12 and the output-side rotary member 22; and
FIG. 4 is a perspective sectional view of a heat treatment furnace to which the rotational power transmission mechanism according to the first embodiment is applied.

### DETAILED DESCRIPTION OF EMBODIMENTS

Hereinafter, specific embodiments to which the present invention is applied will be described with reference to drawings. However, the present invention is not limited to the following embodiments. In addition, for the sake of clarifying the description, the following description and drawings are appropriately simplified.

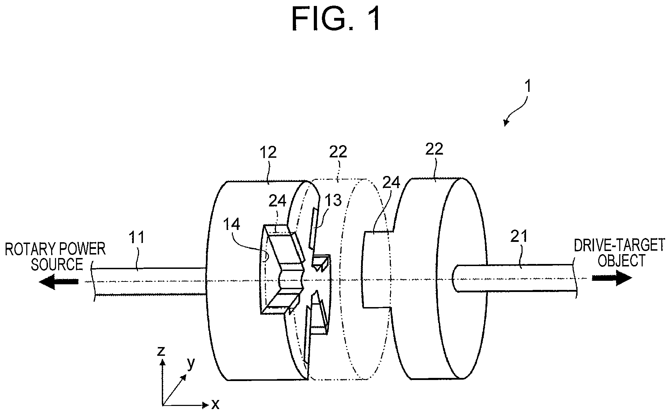

(First embodiment) First, with reference to FIG. 1, a rotational power transmission mechanism according to the first embodiment will be described. FIG. 1 is a perspective view of the rotational power transmission mechanism according to the first embodiment. As shown in FIG. 1, the rotational power transmission mechanism 1 includes an input shaft 11, an input-side rotary member 12, an output shaft 21, and an output-side rotary member 22. Right-handed xyz coordinates shown in the drawings are illustrated for convenience of explanation regarding a positional relation among configuration elements. For example, a plus direction of the z-axis represents a vertically upward direction, and an x-y plane represents a horizontal plane.

As shown in FIG. 1, the input-side rotary member (a first rotary member) 12 in a disk shape is fixed to a tip end of the input shaft 11 located on the output shaft 21 side, the input shaft 11 being coupled to a rotary power source such as an electric motor, a hydraulic motor, and an air motor. On the other hand, the output-side rotary member 22 in a disk shape is fixed to a tip end of the output shaft 21 located on the input shaft 11 side, the output shaft 21 being coupled to a drive-target object. The input-side rotary member 12 and the output-side rotary member (a second rotary member) 22 are disposed to face each other.

On a face of the input-side rotary member 12, the face facing the output-side rotary member 22, multiple recessed portions 14 formed around a rotational axis are arranged along a circumferential direction with equal intervals. In an example of FIG. 1, three recessed portions 14 are formed on the input-side rotary member 12. On the other hand, on a face of the output-side rotary member 22, the face facing the input-side rotary member 12, multiple projected portions 24 formed around a rotational axis are arranged along the circumferential direction with equal intervals. In the example of FIG. 1, three projected portions 24 are formed on the output-side rotary member 22.

The number of the recessed portions 14 formed on the input-side rotary member 12 and the number of the projected portions 24 formed on the output-side rotary member 22 may be one, respectively. However, as described later, in order to maintain the non-contact state by repellent force of permanent magnets, pluralities of recessed portions 14 and projected portion 24 may be provided. As described above, the multiple recessed portions 14 and the multiple projected portions 24 may be arranged with equal intervals, respectively.

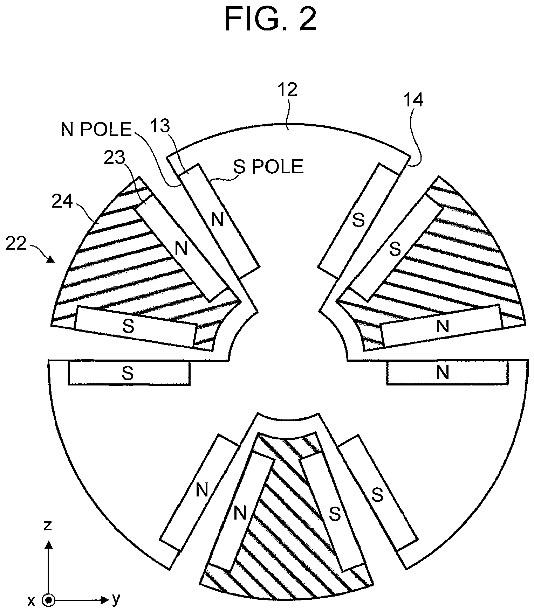

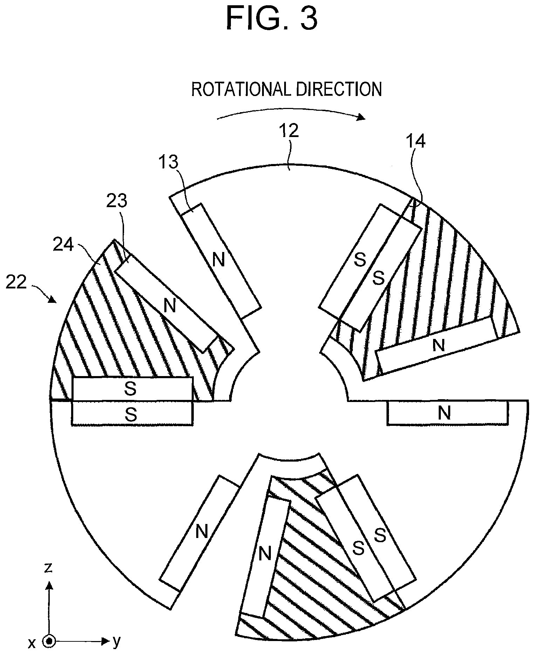

As indicated by two-dot chain lines in FIG. 1, the projected portions 24 of the output-side rotary member 22 are inserted into the corresponding recessed portions 14 of the input-side rotary member 12 so that the input-side rotary member 12 is coupled to the output-side rotary member 22 in a relatively rotatable manner. Here, FIG. 2 and FIG. 3 are sectional views, each showing a positional relation between the input-side rotary member 12 and the output-side rotary member 22. FIG. 2 shows a non-contact state between the input-side rotary member 12 and the output-side rotary member 22. FIG. 3 shows a contact state between the input-side rotary member 12 and the output-side rotary member 22.

As shown in FIG. 1 and FIG. 2, each of the recessed portions 14 is formed in a flabellate shape expanding from the rotational axis toward the outer circumferential surface of the input-side rotary member 12. On the other hand, as shown in FIG. 2, each of the projected portions 24 is formed in a flabellate shape from the rotational axis toward the outer circumferential surface of the output-side rotary member 22. Here, each projected portion 24 to be inserted into each corresponding recessed portion 14 has a smaller width in the circumferential direction than that of this recessed portion 14. Hence, as shown in FIG. 2 and FIG. 3, each projected portion 24 is relatively rotatable in the circumferential direction in each corresponding recessed portion 14. That is, the input-side rotary member 12 and the output-side rotary member 22 can be relatively rotatable in the circumferential direction.

As shown in FIG. 1 to FIG. 3, a pair of contact surfaces of each recessed portion 14 to come into contact with each corresponding projected portion 24 is provided with permanent magnets 13 such that each recessed portion 14 and each corresponding projected portion 24 repel each other. Similarly, a pair of contact surfaces of each projected portion 24 to come into contact with each corresponding recessed portion 14 is provided with permanent magnets 23 such that each recessed portion 14 and each corresponding projected portion 24 repel each other. This means that the respective contact surfaces of each permanent magnet 13 and each corresponding permanent magnet 23 that come into contact with each other have the same polarity. Reference numerals S and N indicated inside of each permanent magnet 13 and each permanent magnet 23 in Figs. 2 and 3 indicate polarities in the respective contact surfaces of the permanent magnet 13 and the permanent magnet 23.

As shown in FIG. 2 and FIG. 3, in each projected portion 24, the permanent magnets 23 in the pair of contact surfaces are arranged to be different in polarity from each other. In such a configuration, in each projected portion 24, it is possible to align magnetic flux lines of the two permanent magnets 23 so as to boost repellent force between each permanent magnet 13 and each corresponding permanent magnet 23. In addition, in each recessed portion 14 adjacent to each corresponding projected portion 24, the permanent magnets 13 in the pair of contact surfaces adjacent to each corresponding projected portion 24 are arranged to be different in polarity from each other. Hence, it is possible to align magnetic flux lines of the two permanent magnets 13 so as to boost repellent force between each permanent magnet 13 and each corresponding permanent magnet 23.

With the above configuration, when the rotational torque is relatively small, as shown in FIG. 2, with the repellent force between the permanent magnets 13 and the permanent magnets 23, the rotational power can be transmitted from the input-side rotary member 12 to the output-side rotary member 22 in a non-contact state. On the other hand, when the rotational torque is relatively large, as shown in FIG. 3, the rotational torque overcomes the repellent force between the permanent magnets 13 and the permanent magnets 23, so that the recessed portions 14 and the projected portions 24 come into contact with each other. Hence, it is possible to directly transmit the rotational power from the input-side rotary member 12 to the output-side rotary member 22.

In this manner, in the rotational power transmission mechanism 1 according to the present embodiment, when the rotational torque is relatively small, the rotational power can be transmitted from the input-side rotary member 12 to the output-side rotary member 22 in a non-contact state; and when the rotational torque is relatively large, the input-side rotary member 12 and the output-side rotary member 22 come into contact with each other, to thereby suppress slippage therebetween.

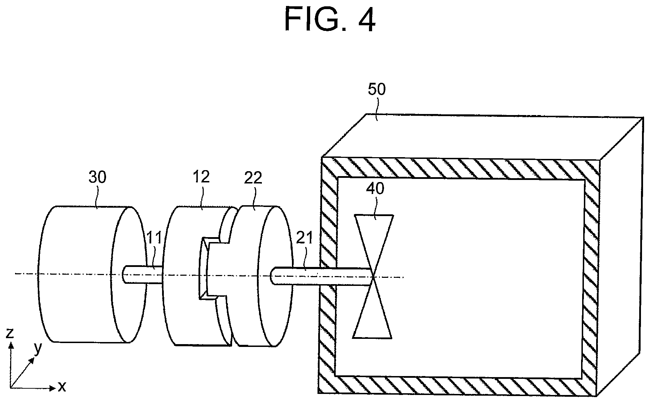

FIG. 4 is a perspective sectional view of a heat treatment furnace to which the rotational power transmission mechanism according to the first embodiment is applied. The rotational power of a motor 30 coupled to the input shaft 11 is transmitted from the input-side rotary member 12 to the output-side rotary member 22 so as to rotate a fan 40 fixed to the tip end of the output shaft 21. The fan 40 is disposed inside a furnace body 50. By rotationally driving the fan 40, it is possible to agitate the air inside the furnace body 50 so as to uniform the temperature inside the furnace body 50.

Here, if the drive shaft of the fan 40 is configured as a single shaft without being divided into the input shaft 11 and the output shaft 21, heat inside the furnace body 50 is released through this drive shaft. To the contrary, in the heat treatment furnace to which the rotational power transmission mechanism according to the first embodiment is applied, the drive shaft of the fan 40 is divided into the input shaft 11 and the output shaft 21. It is possible to transmit the rotational power from the input-side rotary member 12 fixed to the tip end of the input shaft 11 to the output-side rotary member 22 fixed to the tip end of the output shaft 21 in a non-contact state. Hence, heat transfer from the furnace body 50 via the output shaft 21 can be blocked between the output-side rotary member 22 and the input-side rotary member 12. In this manner, by using the rotational power transmission mechanism according to the first embodiment, it is possible to provide a heat treatment furnace excellent in thermal insulation.

Furthermore, in the heat treatment furnace to which the rotational power transmission mechanism according to the first embodiment is applied, as aforementioned, when the rotational torque is relatively small, the rotational power can be transmitted from the input-side rotary member 12 to the output-side rotary member 22 in a non-contact state; and when the rotational power is relatively large, the input-side rotary member 12 and the output-side rotary member 22 can come into contact with each other, to thereby suppress slippage therebetween.

The present invention is not limited to the above embodiments, and may appropriately be changed without departing from the scope of the invention. For example, the input-side rotary member 12 and the output-side rotary member 22 may have respective shapes that oppose each other.

## Claims

1. A rotational power transmission mechanism (1) comprising:
an input shaft (11) and an output shaft (21) that are apart from each other;
a first rotary member (12) fixed to a tip end of the input shaft (11) on an output shaft (21) side of the input shaft (11); and
a second rotary member (22) fixed to a tip end of the output shaft (21) on an input shaft (11) side of the output shaft (21) so as to face the first rotary member (12),
wherein
into a recessed portion (14) formed around a rotational axis of one of the first rotary member (12) and the second rotary member (22), a projected portion (24) formed around a rotational axis of the other of the first rotary member (12) and the second rotary member (22) is inserted such that the first rotary member (12) and the second rotary member (22) are coupled to each other in a relatively rotatable manner,
and
permanent magnets (13, 23) are respectively provided on a pair of contact surfaces of the recessed portion (14) and on a pair of contact surfaces of the projected portion (24) in such a manner that the recessed portion (14) and the projected portion (24) repel each other at the respective pairs of contact surfaces where the recessed portion (14) and the projected portion (24) come into contact with each other through relative rotation between the first rotary member (12) and the second rotary member (22).

2. The rotational power transmission mechanism (1) according to claim 1, wherein
in the projected portion (24), the permanent magnets (23) in the pair of contact surfaces have different polarities from each other.

3. The rotational power transmission mechanism (1) according to claim 1 or 2, wherein
a plurality of recessed portions (14) are formed with intervals along a circumferential direction of the first rotary member (12),
and
a plurality of projected portions (24) are formed with intervals along a circumferential direction of the second rotary member (22).

4. A heat treatment furnace comprising:
the rotational power transmission mechanism (1) according to any one of claims 1 to 3;
a motor (30) coupled to the input shaft (11) of the rotational power transmission mechanism (1);
a fan (40) fixed to a tip end of the output shaft (21) of the rotational power transmission mechanism (1); and
a furnace body (50),
wherein
the fan (40) is disposed inside the furnace body (50).
